# FASCICULE DE BREVET EUROPEEN

(11) **EP 2 108 473 B1**
(45) Date de publication et mention de la délivrance du brevet: **23.03.2011**
(21) Numéro de dépôt: 09305295.9
(22) Date de dépôt: 07.04.2009
(51) Int. Cl.: B23B 29/02, B23Q 11/00, F16F 7/108

(54) **Porte-outil pourvu d'un moyen d'amortissement**
Werkzeughalter mit einem Dämpfungsmittel
Tool-holder equipped with shock-absorbing means

(30) Priorité: 10.04.2008 FR 0852416
(43) Date de publication de la demande: 14.10.2009
(73) Titulaire: SECO - E.P.B., 67330 Bouxwiller (FR)
(72) Inventeur: Ostermann, Mathieu, 67700 Saverne (FR); Freyermuth, Alain, 67350 Pfaffenhofen (FR)
(74) Mandataire: Nuss, Pierre

(56) Documents cités:
- DE-U- 1 897 206
- US-A- 3 774 730
- US-A1- 2003 147 707

## Description

La présente invention concerne le domaine des accessoires des machines-outils, à commande numérique, centres d'usinage, cellules et ateliers flexibles et a pour objet un porte-outil pourvu d'un moyen d'amortissement. Selon le préambule de la revendication 1 et comme connû par le document US-A-3774730.

Les porte-outils ont tendance, du fait même de leur constitution, à vibrer, ce qui est préjudiciable à leur bon fonctionnement. Cette tendance à vibrer est d'autant plus importante que les vitesses de travail des machines-outils actuelles sont en constante augmentation.

Pour obvier à ces inconvénients il a été proposé de munir les porte-outils d'un dispositif d'amortissement des oscillations permettant une adaptation de leur rigidité aux conditions de travail.

A cet effet, on connaît actuellement, notamment par US-A-3 447 402, un tel dispositif qui consiste essentiellement en une masse d'amortissement montée dans un logement axial et maintenu dans ce dernier par serrage entre des masses élastiquement déformables, le réglage de la raideur étant réalisé par l'intermédiaire d'un moyen de butée chargé par ressort, le tarage de ce ressort pouvant lui-même être réglé par l'intermédiaire d'un dispositif à vis.

Par ailleurs, on connaît, par FR-A-2 173 957, un amortisseur réglable pour machines-outils qui est constitué par un organe d'amortissement placé dans un trou axial d'un arbre porte-outil et relié à cet arbre par l'intermédiaire d'éléments élastiques annulaires, montés sur des extrémités coniques de l'organe d'amortissement et pouvant être comprimés sur lesdites extrémités, afin de régler la rigidité.

EP-A-0 571 490 décrit un autre dispositif d'amortissement, qui est constitué un support cylindrique central, logé dans le corps du porte-outil et sur lequel est monté un corps amortisseur. Ce corps amortisseur est relié au support cylindrique central par l'intermédiaire d'éléments élastiques disposés dans les extrémités du corps amortisseurs et retenus par l'intermédiaire de rondelles reliés au support central. Un dispositif similaire est décrit dans EP-A-1 248 692.

Dans tous ces dispositifs connus, le maintien de l'organe d'amortissement dans le trou axial est effectué par action sur les extrémités de l'organe par l'intermédiaire d'éléments élastiquement déformables, ce, toutefois uniquement par action auxdites extrémités, sans contact desdits éléments élastiquement déformables avec la génératrice de l'organe d'amortissement (US-A.-3 447 402 et FR-A-2 173 957). Les deux documents décrivant l'utilisation d'un support cylindrique central ne prévoit pas non plus de contact de la génératrice de l'organe d'amortissement avec un élément élastiquement déformable qui serait en contact, par ailleurs, avec le logement de l'organe amortisseur.

Il en résulte que l'action sur la rigidité d'un arbre équipé d'un tel organe d'amortissement est uniquement possible par les extrémités, de sorte que l'amortissement s'effectue davantage de manière axiale et ne peut donc pas être optimal.

La présente invention a pour but de pallier ces inconvénients en proposant un porte-outil pourvu d'un moyen d'amortissement permettant d'annihiler les effets vibratoires dus aux efforts de coupe et aux vitesses d'usinage, tout en étant de conception et de mise en oeuvre simples.

A cet effet, le porte-outil, tel que tête à aléser, ou arbre porte-fraise, est pourvu des caractéristiques décrites dans la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en coupe d'un porte-outil pourvu d'un moyen d'amortissement conforme à l'invention ;
la figure 2 est une vue analogue à celle de la figure 1 d'une première variante de réalisation de l'invention, et
la figure 3 est une vue analogue à celle des figures 1 et 2 d'une deuxième variante de réalisation de l'invention.

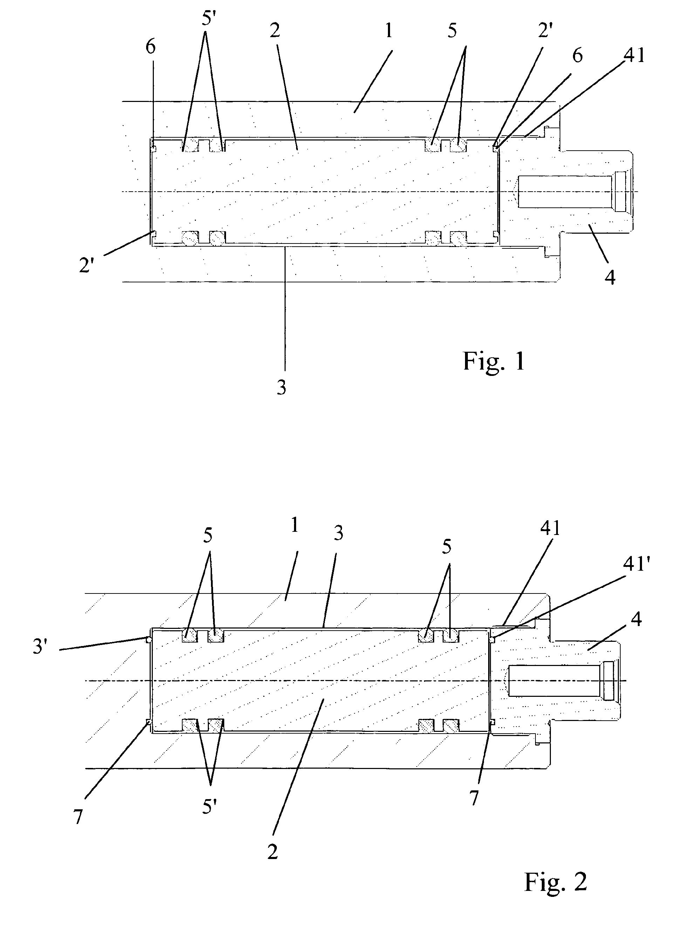

Les figures 1 à 3 des dessins annexés représentent, à titre d'exemples, un porte-outil sous forme de tête à aléser 1, qui est pourvu d'un moyen d'amortissement 2 sous forme d'un corps allongé disposé dans un logement d'extrémité 3 du porte-outil 1, de forme et de dimension correspondantes, et fermé à son extrémité par un corps 4 de réception d'une tête à aléser. De manière connue, la fermeture de l'extrémité du logement 3 du porte-outil 1 est réalisée par vissage direct du centreur 41 du corps 4 de réception d'une tête à aléser ou par emmanchement de ce corps 4 dans l'extrémité du logement avec serrage par l'intermédiaire de vis. Les figures 1 à 3 représentent un exemple de mise en oeuvre de l'invention, mais celle-ci est bien entendu aussi applicable pour la mise en oeuvre, par exemple, d'un porte-fraise.

De manière connue, le logement 3 du porte-outil 1 est réalisé pour n'occasionner qu'une perte de rigidité statique maximum de 5 % par rapport au cylindre plein et la profondeur du logement est égale à deux fois le diamètre du porte-outil 1. Dans le cas d'utilisation d'un porte-outil 1 sous forme de tête à aléser, le corps 4 de réception de ladite tête à aléser est avantageusement pourvu d'un centreur 41 vissé avec un pas fin dans le porte-outil 1 et bloqué en rotation par l'intermédiaire de tenons non représentés.

Conformément à l'invention, le moyen d'amortissement 2 est de type uniquement à absorption radiale et est pourvu d'au moins un moyen 5 élastiquement déformable, au moins près de chaque extrémité, lesdits moyens 5 élastiquement déformables s'étendant entre l'enveloppe du moyen d'amortissement 2 et la paroi du logement 3 du porte-outil 1 en étant serrés entre la paroi du logement 3 et le moyen d'amortissement 2, les extrémités du moyen d'amortissement s'étendant dans le logement 3 sans contrainte. Ainsi, le moyen d'amortissement 2 est maintenu dans le logement 3 du porte-outil 1 uniquement par les moyens 5 élastiquement déformables et ses extrémités sont libres par rapport, d'une part, au fond du logement 3 et, d'autre part, par rapport à la face arrière du corps 4 de réception d'une tête à aléser ou autre. L'absence de contrainte sur les extrémités du moyen d'amortissement 2 permet que toute l'action de ce dernier se fasse exclusivement dans le sens radial.

De préférence et comme le montrent les figures 1 à 3 des dessins annexés, les moyens 5 élastiquement déformables sont avantageusement des éléments annulaires réalisés en une matière amortissante et sont fixés sur le moyen d'amortissement 2 par coopération avec des gorges annulaires 5' prévues dans ledit moyen d'amortissement 2. Un tel mode de réalisation du moyen d'amortissement 2 permet d'éliminer tout procédé de réglage de la rigidité conféré par le moyen d'amortissement 2 et donc d'en simplifier l'utilisation tout en en optimisant le fonctionnement.

Conformément à une autre caractéristique de l'invention, le moyen d'amortissement 2 peut être muni de plus de deux moyens 5 élastiquement déformables. Avantageusement, dans un tel cas, les moyens 5 élastiquement déformables seront disposés à intervalles réguliers et en nombre égal en partant de chaque extrémité. Ainsi, il est possible de faire varier les fréquences d'amortissement et donc la rigidité du porte-outil 1.

Afin d'éviter un effet de choc ou de battement longitudinal du moyen d'amortissement 2 dans le logement 3 contre le fond dudit logement 3 ou contre le centreur 41 du corps 4 de réception d'une tête à aléser ou autre, il est avantageusement prévu, selon un premier mode de réalisation de l'invention, de munir chaque face d'extrémité du moyen d'amortissement 2 d'une gorge circulaire 2' de logement d'un joint annulaire 6, la longueur du moyen d'amortissement 2 pourvu des joints annulaires 6 étant légèrement inférieure à la longueur du logement 3 fermé par le centreur 41 1 du corps 4 de réception d'une tête à aléser ou autre.

Selon une variante de réalisation de l'invention et comme le montre la figure 2 des dessins annexés, l'effet de choc ou de battement longitudinal peut également être évité par prévision d'une gorge circulaire 3', 41', respectivement dans le fond du logement 3 et sur la face arrière du centreur 41 du corps 4 de réception d'une tête à aléser ou autre, ces gorges circulaires 3', 41' étant munies de joints annulaires 7, la distance entre les joints annulaires 7 en position de montage du moyen d'amortissement 2 étant avantageusement légèrement supérieure à la longueur du moyen d'amortissement 2. Ainsi, le moyen d'amortissement 2 est logé dans le porte-outil 1 avec une possibilité de déplacement axial très faible, mais sans serrage.

A titre d'exemple, les moyens 5 élastiquement déformables, ainsi que les joints 6 et 7 sont préférentiellement réalisés sous forme de joints toriques en nitrile et le moyen d'amortissement 2 est avantageusement réalisé en un acier à forte densité.

Conformément à l'invention, le moyen d'amortissement 2 a pour but de réagir en opposition de phase par rapport au déplacement du porte-outil 1 et ainsi de stabiliser ce dernier. A cet effet, pour que l'ensemble constitué par le moyen d'amortissement 2 et par les moyens 5 élastiquement déformables ait un effet optimal, cet ensemble doit être placé sur l'amplitude maximale, c'est-à-dire au plus près de l'arête de coupe, donc dans le logement 3 à l'avant du porte-outil. De plus, cet ensemble doit avoir une fréquence propre égale à la première fréquence propre du porte-outil 1.

Le moyen d'amortissement 2 est donc dimensionné en fonction du déplacement qui peut être permis au porte-outil 1.

De préférence, selon une autre caractéristique de l'invention, le moyen d'amortissement 2 présente un diamètre inférieur à celui du logement 3 du porte-outil 1 d'environ 1 mm et les moyens 5 élastiquement déformables présentent un diamètre extérieur supérieur au diamètre intérieur du logement 3 d'une valeur comprise entre 0,1mm et 0,9mm. Il en résulte que le moyen d'amortissement 2 peut théoriquement avoir un débattement radial d'environ 1mm par rapport à son diamètre, soit d'environ 0.5mm par rapport au rayon. La prévision d'un surdimensionnement des moyens 5 élastiquement déformables par rapport au diamètre du logement 3 assure un montage sans jeu dudit moyen d'amortissement 2 dans le logement 3 avec, ainsi, obtention d'une rigidité prédéfinie du porte-outil 1.

La recherche d'une rigidité accrue peut être solutionnée par augmentation symétrique du nombre de moyens 5 élastiquement déformables à chaque extrémité du moyen d'amortissement 2.

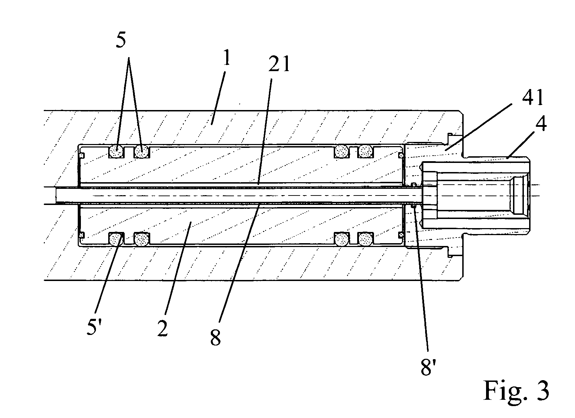

La figure 3 des dessins annexés représente un autre mode de réalisation de l'invention, dans lequel le moyen d'amortissement 2 est pourvu d'un perçage axial 21 qui est traversé par un tube 8 d'alimentation en lubrifiant. Ce tube 8 est, d'une part, fixé à demeure dans le porte-outil 1, au fond du logement 3 par collage ou autre et, d'autre part, assemblé par l'intermédiaire d'un joint torique 8' avec le centreur 41 du corps 4 de réception d'une tête à aléser ou autre. Ainsi, le tube 8 traverse entièrement le moyen d'amortissement 2, ce toutefois sans jamais être directement en contact avec ce dernier, ni avec une paroi coopérant avec ledit moyen d'amortissement 2.

Grâce à l'invention, il est possible de réaliser un moyen d'amortissement pour porte-outil pouvant être mis en oeuvre sur tous types de porte-outil et dont le déplacement s'effectue exclusivement dans le sens radial.

Par ailleurs, ce moyen d'amortissement 2 ne nécessite aucun élément complémentaire ni procédé de réglage spécifiques, tout en permettant un fonctionnement optimal.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention comme défini dans les revendications.

## Revendications

1. Porte-outil, tel que tête à aléser (1), ou arbre porte-fraise, pourvu d'un moyen d'amortissement (2) sous forme d'un corps allongé disposé dans un logement d'extrémité (3) du porte-outil (1), de forme et de dimension correspondantes, et fermé à son extrémité par un corps (4) de réception d'une tête à aléser ou par un élément porte-fraise, le moyen d'ammortissement (2) étant pourvu d'au moins un moyen (5) élastiquement déformable, au moins près de chaque extrémité, lesdits moyens (5) élastiquement déformables s'étendant entre l'enveloppe du moyen d'amortissement (2) et la paroi du logement (3) du porte-outil (1) en étant serrés entre la paroi du logement (3) et le moyen d'amortissement (2), **caractérisé en ce que** le moyen d'amortissement (2) est de type uniquement à absorption radiale et **en ce que** les extrémités du moyen d'amortissement s'étendant dans le logement (3) sans contrainte.

2. Porte-outil, suivant la revendication 1, **caractérisé en ce que** les moyens (5) élastiquement déformables sont des éléments annulaires réalisés en une matière amortissante et sont fixés sur le moyen d'amortissement (2) par coopération avec des gorges annulaires (5') prévues dans ledit moyen d'amortissement (2).

3. Porte-outil, suivant l'une quelconque des revendications 1 et 2, **caractérisé en ce que** le moyen d'amortissement (2) est muni de plus de deux moyens (5) élastiquement déformables.

4. Porte-outil, suivant l'une quelconque des revendications 1 et 2, **caractérisé en ce que** les moyens (5) élastiquement déformables sont disposés à intervalles réguliers et en nombre égal en partant de chaque extrémité.

5. Porte-outil, suivant l'une quelconque des revendications 1 et 2, **caractérisé en ce que** chaque face d'extrémité du moyen d'amortissement (2) est munie d'une gorge circulaire (2') de logement d'un joint annulaire (6), la longueur du moyen d'amortissement (2) pourvu des joints annulaires (6) étant légèrement inférieure à la longueur du logement (3) fermé par le centreur (41) du corps (4) de réception d'une tête à aléser ou autre.

6. Porte-outil, suivant l'une quelconque des revendications 1 et 2, **caractérisé en ce que** le fond du logement (3) et la face arrière du centreur (41) du corps (4) de réception d'une tête à aléser ou autre, sont munis d'une gorge circulaire (3', respectivement 41'), ces gorges circulaires (3', 41') étant munies de joints annulaires (7), la distance entre les joints annulaires (7) en position de montage du moyen d'amortissement (2) étant légèrement supérieure à la longueur du moyen d'amortissement (2).

7. Porte-outil, suivant l'une quelconque des revendications 1 à 6, **caractérisé en ce que** le moyen d'amortissement (2) est logé dans le porte-outil (1) avec une possibilité de déplacement axial très faible, mais sans serrage.

8. Porte-outil, suivant l'une quelconque des revendications 1 à 7, **caractérisé en ce que** les moyens (5) élastiquement déformables, ainsi que les joints (6 et 7) sont préférentiellement réalisés sous forme de joints toriques en nitrile et le moyen d'amortissement (2) est réalisé en un acier à forte densité.

9. Porte-outil, suivant l'une quelconque des revendications 1 à 8, **caractérisé en ce que** le moyen d'amortissement, (2) présente un diamètre inférieur à celui du logement (3) du porte-outil (1) d'environ 1mm et les moyens (5) élastiquement déformables présentent un diamètre extérieur supérieur au diamètre intérieur du logement (3) d'une valeur comprise entre 0,1mm et 0,9mm.

10. Porte-outil, suivant l'une quelconque des revendications 1 à 9, **caractérisé en ce que** le moyen d'amortissement (2) est pourvu d'un perçage axial (21) qui est traversé par un tube (8) d'alimentation en lubrifiant.

## Claims

1. Tool holder, such as a boring head (1), or a milling shaft, provided with a damping means (2) in the form of an elongated body, which is arranged in an end housing (3) of the tool holder (1), which housing is of appropriate shape and size, and closed at its end by a body (4) for receiving a boring head or by a milling element, wherein the damping means (2) is provided with at least one elastically deformable means (5), at least close to each end, wherein said elastically deformable means (5) extend between the envelope of the damping means (2) and the wall of the housing (3) of the tool holder (1) and are clamped between the wall of the housing (3) and the damping means (2), **characterised in that** the damping means (2) are designed solely for radial absorption and **in that** the ends of the damping means extend into the housing (3) without stress.

2. Tool holder according to claim 1, **characterised in that** the elastically deformable means (5) are annular elements made from a damping material, and are fixed onto the damping means (2) by cooperation with annular grooves (5') provided in said damping means (2).

3. Tool holder according to any one of claims 1 and 2, **characterised in that** the damping means (2) is provided with more than two elastically deformable means (5).

4. Tool holder according to any one of claims 1 and 2, **characterised in that** the elastically deformable means (5) are arranged at regular intervals and in an even number starting from each end.

5. Tool holder according to any one of claims 1 and 2, **characterised in that** each end face of the damping means (2) is provided with a circular groove (2') for accommodating an annular seal (6), wherein the length of the damping means (2) provided with annular seals (6) is slightly smaller than the length of the housing (3) which is closed by the centring device (41) of the body (4) for receiving a boring head or the like.

6. Tool holder according to any one of claims 1 and 2, **characterised in that** the base of the housing (3) and the rear face of the centring device (41) of the body (4) for receiving a boring head or the like are provided with a circular groove (3' and 41', respectively), wherein these circular grooves (3', 41') are provided with annular seals (7), and the distance between the annular seals (7) in the assembly position of the damping means (2) is slightly greater than the length of the damping means (2).

7. Tool holder according to any one of claims 1 to 6, **characterised in that** the damping means (2) is accommodated in the tool holder (1) with the possibility of a very slight axial displacement, but without clamping.

8. Tool holder according to any one of claims 1 to 7, **characterised in that** the elastically deformable means (5) as well as the seals (6 and 7) are preferably made in the form of O-rings from nitrile, and the damping means (2) is made from a high-density steel.

9. Tool holder according to any one of claims 1 to 8, **characterised in that** the damping means (2) has a diameter which is smaller than that of the housing (3) of the tool holder (1) by approximately 1 mm, and the elastically deformable means (5) have an outer diameter which is greater than the internal diameter of the housing (3) by a value of between 0.1 mm and 0.9 mm.

10. Tool holder according to any one of claims 1 to 9, **characterised in that** the damping means (2) is provided with an axial perforation (21) through which a lubricant supply tube (8) passes.

## Patentansprüche

1. Werkzeughalter, wie ein Ausdrehkopf (1) oder ein Fräserdorn, der mit einer Dämpfungseinrichtung (2) in Form eines länglichen Körpers versehen ist, der in einer Endaufnahme (3) des Werkzeughalters (1) angeordnet ist, die eine entsprechende Form und Abmessung hat und an ihrem Ende von einem Körper (4) zur Aufnahme eines Ausdrehkopfes oder von einem Fräserdornelement verschlossen wird, wobei die Dämpfungseinrichtung (2) mindestens nahe jedem Ende mit mindestens einer elastisch verformbaren Einrichtung (5) versehen ist, wobei die elastisch verformbaren Einrichtungen (5) sich zwischen der Hülle der Dämpfungseinrichtung (2) und der Wand der Aufnahme (3) des Werkzeughalters (1) erstrecken, indem sie zwischen der Wand der Aufnahme (3) und der Dämpfungseinrichtung (2) eingespannt sind, **dadurch gekennzeichnet, dass** die Dämpfungseinrichtung (2) von der Art nur mit radialer Absorption ist, und dass die Enden der Dämpfungseinrichtung sich in der Aufnahme (3) zwangsfrei erstrecken.

2. Werkzeughalter nach Anspruch 1, **dadurch gekennzeichnet, dass** die elastisch verformbaren Einrichtungen (5) ringförmige Elemente sind, die aus einem dämpfenden Stoff hergestellt und an der Dämpfungseinrichtung (2) durch Zusammenwirkung mit in der Dämpfungseinrichtung (2) vorgesehenen Ringnuten (5') befestigt sind.

3. Werkzeughalter nach einem der Ansprüche 1 und 2, **dadurch gekennzeichnet, dass** die Dämpfungseinrichtung (2) mit mehr als zwei elastisch verformbaren Einrichtungen (5) versehen ist.

4. Werkzeughalter nach einem der Ansprüche 1 und 2, **dadurch gekennzeichnet, dass** die elastisch verformbaren Einrichtungen (5) in regelmäßigen Abständen und von jedem Ende ausgehend in gleicher Anzahl angeordnet sind.

5. Werkzeughalter nach einem der Ansprüche 1 und 2, **dadurch gekennzeichnet, dass** jede Endseite der Dämpfungseinrichtung (2) mit einer Kreisnut (2') zur Aufnahme einer Ringdichtung (6) versehen ist, wobei die Länge der mit Ringdichtungen (6) versehenen Dämpfungseinrichtung (2) geringfügig kleiner als die Länge der Aufnahme (3) ist, die von der Zentriervorrichtung (41) des Körpers (4) zur Aufnahme eines Ausdrehkopfes oder anderem verschlossen wird.

6. Werkzeughalter nach einem der Ansprüche 1 und 2, **dadurch gekennzeichnet, dass** der Boden der Aufnahme (3) und die Rückseite der Zentriervorrichtung (41) des Körpers (4) zur Aufnahme eines Ausdrehkopfes öder anderem mit einer Kreisnut (3' bzw. 41') versehen sind, wobei diese Kreisnuten (3', 41') mit Ringdichtungen (7) versehen sind, wobei der Abstand zwischen den Ringdichtungen (7) in der Einbaustellung der Dämpfungseinrichtung (2) geringfügig größer als die Länge der Dämpfungseinrichtung (2) ist.

7. Werkzeughalter nach einem der Ansprüche 1 bis 6, **dadurch gekennzeichnet, dass** die Dämpfungseinrichtung (2) im Werkzeughalter (1) mit einer sehr geringen Möglichkeit der axialen Verschiebung, aber ohne Einspannen, aufgenommen wird.

8. Werkzeughalter nach einem der Ansprüche 1 bis 7, **dadurch gekennzeichnet, dass** die elastisch verformbaren Einrichtungen (5) sowie die Dichtungen (6 und 7) vorzugsweise in Form von Dichtringen aus Nitril hergestellt sind, und die Dämpfungseinrichtung (2) aus einem hochdichten Stahl hergestellt ist.

9. Werkzeughalter nach einem der Ansprüche 1 bis 8, **dadurch gekennzeichnet, dass** die Dämpfungseinrichtung (2) einen Durchmesser aufweist, der um etwa 1 mm geringer ist als derjenige der Aufnahme (3) des Werkzeughalters (1), und die elastisch verformbaren Einrichtungen (5) einen Außendurchmesser aufweisen, der um einen Wert zwischen 0,1 mm und 0,9 mm größer ist als der Innendurchmesser der Aufnahme (3).

10. Werkzeughalter nach einem der Ansprüche 1 bis 9, **dadurch gekennzeichnet, dass** die Dämpfungseinrichtung (2) mit einer axialen Bohrung (21) versehen ist, die von einem Schmiermittel-Zufuhrrohr (8) durchquert wird.
